# EUROPEAN PATENT APPLICATION

(11) **EP 4 373 039 A1**
(43) Date of publication of application: **22.05.2024**
(21) Application number: 22841007.2
(22) Date of filing: 27.04.2022
(51) Int. Cl.: H04L 12/46

(54) **DBNG-CP BACKUP METHOD AND APPARATUS**

(30) Priority: 16.07.2021 CN 202110809209
(71) Applicant: ZTE Corporation, Shenzhen, Guangdong 518057 (CN)
(72) Inventor: SONG, Xueyan, Shenzhen, Guangdong 518057 (CN); CHEN, Yong, Shenzhen, Guangdong 518057 (CN); LI, Zhijun, Shenzhen, Guangdong 518057 (CN)
(74) Representative: Brunazzi, Stefano
(86) International application number: PCT/CN2022/089582
(87) International publication number: WO 2023/284366

(57) **Abstract**

Provided is a DBNG-CP redundancy method and apparatus. The method includes: a first DBNG-CP sends a redundancy association request to a second DBNG-CP which belongs to the same redundancy group instance, so as to perform redundancy capability association; and the first DBNG-CP receives a redundancy association response returned by the second DBNG-CP with respect to the redundancy association request, so as to complete the active/standby election between the first DBNG-CP and the second DBNG-CP. The present disclosure solves the problem of redundancy capacity association of DBNG-CP redundancy group instances, and increases the flexibility of DBNG-CP redundancy protection.

## Description

### Technical Field

The embodiments of the present disclosure relate to the field of communications, and in particular, to a Disaggregated Broadband Network Gateway-Control Plane (DBNG-CP) redundancy method and apparatus.

### Background

A traditional metropolitan area network service gateway, i.e. a Broadband Access Server (BRAS) device, mainly implements access control and management functions for fixed network broadband users.

A virtual Broadband Access Server (vBRAS) having a control plane and a forwarding plane disaggregated implements centralized management and traffic forwarding for fixed broadband users, thereby improving the utilization rate of device resources. In addition, redundant backup is implemented by means of the pooling of the forwarding plane and the clouding of the control plane, thereby improving the network reliability. The implementation by means of technologies such as load sharing and active/standby redundancy can improve the flexibility of service deployment and the reliability of service operation.

In order to ensure high reliability of DBNG-CPs, two CPs deployed in different Data Centers (DCs) (possibly deployed in different cities, different machine rooms, etc.) are generally configured to be in the same redundancy group, and the active and standby CPs may be located in different network domains. For example, DBNG-CP1 and DBNG-CP2 are configured as the same redundancy group instance, and the redundancy group instance information herein may include: a redundancy group member, a priority of the redundancy group member, a switching policy, etc. The locations where the CP may fail include: link communication between the CP-UP, link failure between the active and standby CPs, and a CP instance failure.

In order to support CP reliability, control plane interface protocol support between the DBNG-CP and the DBNG-UP needs to be used, and BBF WT-459 specifies that the DBNG control plane interface protocol is implemented by using a Packet Forwarding Control Protocol (PFCP). However, for the important scenario of CP protection, the WT-459 project does not have any standard specification supported by a protocol.

### Summary

The embodiments of the present disclosure provide a DBNG-CP redundancy method and apparatus, so as to at least solve the problem of redundancy capability association of DBNG-CP redundancy group instances in the related art.

According to an embodiment of the present disclosure, provided is a DBNG-CP redundancy method, including: a first DBNG-CP sends a redundancy association request to a second DBNG-CP which belongs to the same redundancy group instance, so as to perform redundancy capability association; and the first DBNG-CP receives a redundancy association response returned by the second DBNG-CP with respect to the redundancy association request, so as to complete the active/standby election between the first DBNG-CP and the second DBNG-CP.

In an exemplary embodiment, after completing the active/standby election between the first DBNG-CP and the second DBNG-CP, the method further includes: after detecting that the first DBNG-CP as an active member fails, reporting failure information to the second DBNG-CP, and triggering redundancy group switching to switch the second DBNG-CP to be the active member.

In an exemplary embodiment, after the redundancy group switching due to the failure of the first DBNG-CP, the method further includes: triggering switching of all DBNG-UPs managed by the first DBNG-CP in the redundancy group instance, so as to switch to manage all DBNG-UPs in the redundancy group instance by the second DBNG-CP.

In an exemplary embodiment, the DBNG-UP reports the carried failure information to the second DBNG-CP by means of a first PFCP protocol message.

In an exemplary embodiment, after triggering redundancy group switching to switch the second DBNG-CP to be the active member, the method further includes: the second DBNG-CP notifies the DBNG-UP of a redundancy group switching result by means of a second PFCP protocol message.

In an exemplary embodiment, the failure of the first DBNG-CP is one of the following: when the first DBNG-CP is in an active state, a failure detected by the first DBNG-CP; and when the first DBNG-CP is in an offline state, a failure of the first DBNG-CP detected by the DBNG-UP by means of a connection with the first DBNG-CP.

In an exemplary embodiment, the first DBNG-CP and the second DBNG-CP extend a redundancy capacity association message by means of a private protocol so as to complete CP redundancy capacity association.

In an exemplary embodiment, a PFCP node report mechanism is used to report the failure information of the first DBNG-CP and perform redundancy group switching notification.

In an exemplary embodiment, the failure information of the first DBNG-CP is reported by means of a PFCP node report request message, and redundancy group switching notification is performed by means of a PFCP node report response message.

In an exemplary embodiment, an information element of the PFCP node report request message is extended so as to report the failure information of the first DBNG-CP.

In an exemplary embodiment, the extended information element in the PFCP node report request message includes a control plane path failure information element and a CP redundancy group identifier information element.

In an exemplary embodiment, the first PFCP protocol message or the second protocol message includes a DBNG-CP redundancy group identifier information element and/or a DBNG-CP failure report information element.

In an exemplary embodiment, the encapsulation format of the DBNG-CP redundancy group identifier information element includes at least one of the following: information element type information, information element field length information, DBNG-CP redundancy group identifier information, DBNG-CP redundancy group member information, DBNG-CP redundancy group type information, and DBNG-CP redundancy group policy information.

In an exemplary embodiment, the encapsulation format of the control plane failure report information element includes at least one of the following: information element type information, information element field length information, local logical interface IP address information, and remote logical interface IP address information.

In an exemplary embodiment, before the first DBNG-CP sends a redundancy association request to the second DBNG-CP, the method further includes: configuring a plurality of redundancy group instances for the first DBNG-CP; and for each redundancy group instance, configuring a plurality of DBNG-UPs managed by the first DBNG-CP, and an active/standby switching policy of the first DBNG-CP redundancy group instance.

In an exemplary embodiment, the first DBNG-CP is an active member in a first redundancy group instance and is a standby member in a second redundancy group instance.

According to another embodiment of the present disclosure, provided is a DBNG-CP redundancy apparatus, including: a sending module, configured to send a redundancy association request to a second DBNG-CP which belongs to the same redundancy group instance, so as to perform redundancy capability association; and a receiving module, configured to receive a redundancy association response returned by the second DBNG-CP with respect to the redundancy association request, so as to complete the active/standby election between the first DBNG-CP and the second DBNG-CP.

According to still another embodiment of the present disclosure, further provided is a computer readable storage medium, the computer readable storage medium storing a computer program, wherein the computer program is configured to execute the steps in any one of the described method embodiments when running.

According to still another embodiment of the present disclosure, further provided is an electronic device, including a memory and a processor, wherein the memory stores a computer program, and the processor is configured to run the computer program so as to execute the steps in any one of the described method embodiments.

In the described embodiment of the present disclosure, the active/standby election is completed between the first DBNG-CP and the second DBNG-CP by means of redundancy association, thereby solving the problem of redundancy capacity association of DBNG-CP redundancy group instances, and increasing the flexibility of DBNG-CP redundancy protection.

### Brief Description of the Drawings

Fig. 1 is a hardware structural block diagram of a computer terminal running a DBNG-CP redundancy method according to an embodiment of the present disclosure;
Fig. 2 is a flowchart of a DBNG-CP redundancy method according to an embodiment of the present disclosure;
Fig. 3 is a structural block diagram of a DBNG-CP redundancy apparatus according to an embodiment of the present disclosure;
Fig. 4 is a schematic diagram of a DBNG-CP redundancy processing mechanism according to an embodiment of the present disclosure;
Fig. 5 is a flowchart of a method for configuring a DBNG-CP redundancy group instance according to an embodiment of the present disclosure; and
Fig. 6 is a flowchart of failure information report processing according to an embodiment of the present disclosure.

### Detailed Description of the Embodiments

Hereinafter, the embodiments of the present disclosure will be described in detail with reference to the drawings and in conjunction with the embodiments.

It should be noted that, terms such as "first" and "second" in the description and the claims of the present disclosure and the described drawings are used to distinguish similar objects, but are not necessarily used to describe a specific sequence or order.

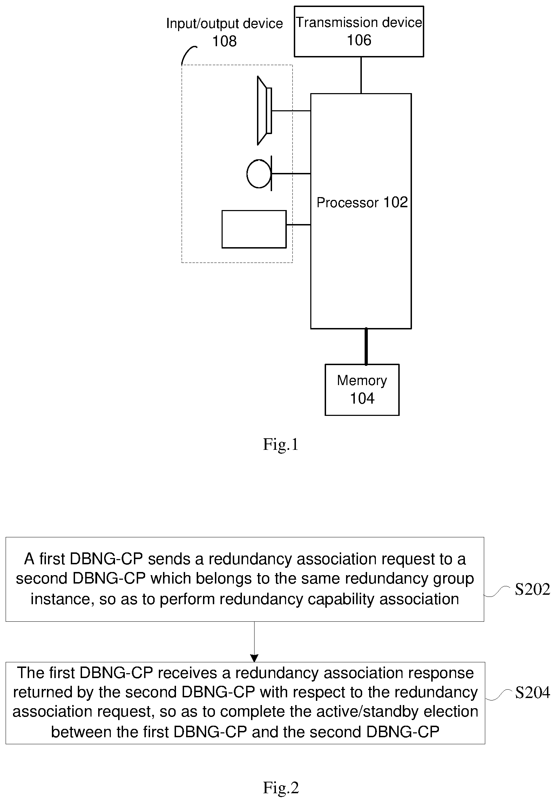

The method embodiments provided in the embodiments of the present disclosure may be executed in a mobile terminal, a computer terminal, a server, or a similar computing apparatus. Taking running on a computer terminal on a network side as an example, Fig. 1 is a hardware structural block diagram of a computer terminal running a DBNG-CP redundancy method according to an embodiment of the present disclosure. As shown in Fig. 1, the computer terminal may include one or more (only one is shown in Fig. 1) processors 102 (the processors 102 may include, but are not limited to, a processing apparatus such as a microprocessor MCU or a programmable logic device FPGA) and a memory 104 for storing data, wherein the computer terminal may further include a transmission device 106 for a communication function, and an input/output device 108. A person of ordinary skill in the art may understand that the structure shown in Fig. 1 is merely exemplary, which does not limit the structure of the computer terminal. For example, the computer terminal may further include components more or less than that shown in Fig. 1, or have a configuration different from that shown in Fig. 1.

The memory 104 may be configured to store a computer program, for example, a software program and a module of application software, such as a computer program corresponding to the redundancy method for a disaggregated broadband network gateway-control plane (DBNG-CP) network function according to the embodiment of the present disclosure. The processor 102 runs the computer program stored in the memory 104, so as to execute various function applications and data processing, i.e. to implement the described method. The memory 104 may include a high-speed random access memory, and may also include a non-volatile memory, such as one or more magnetic storage apparatuses, flash memory, or other non-volatile solid-state memory. In some examples, the memory 104 may further include a memory configured remotely relative to the processor 102, and the remote memory may be connected to the computer terminal over a network. Examples of the described network include, but are not limited to, the Internet, intranets, local area networks, mobile communication networks, and combinations thereof.

The transmission device 106 is configured to receive or transmit data via a network. Specific examples of the described network may include a wireless network provided by a communication provider of the computer terminal. In an example, the transmission device 106 includes a Network Interface Controller (NIC) that may be connected to other network devices via a base station to communicate with the Internet. In an example, the transmission device 106 may be a Radio Frequency (RF) module configured to communicate wirelessly with the Internet.

Provided in the present embodiment is a DBNG-CP redundancy method. Fig. 2 is a flowchart of a DBNG-CP redundancy method according to an embodiment of the present disclosure. As shown in Fig. 2, the flow includes the following steps:
step S202: a first DBNG-CP sends a redundancy association request to a second DBNG-CP which belongs to the same redundancy group instance, so as to perform redundancy capability association; and
step S204: the first DBNG-CP receives a redundancy association response returned by the second DBNG-CP with respect to the redundancy association request, so as to complete the active/standby election between the first DBNG-CP and the second DBNG-CP.

After step S204 in the present embodiment, the method may further include: after the first DBNG-CP as an active member fails, the first DBNG-CP reports failure information to the second DBNG-CP by means of a heartbeat cable between the first DBNG-CP and the second DBNG-CP as a standby member, or reports failure information to the second DBNG-CP by means of a DBNG-UP managed by the first DBNG-CP.

In the present embodiment, after the failure information is reported to the second DBNG-CP, the method may further include: after the second DBNG-CP detects the reported failure information, triggering redundancy group switching to switch the second DBNG-CP to be the active member.

In the present embodiment, the DBNG-UP may report the carried failure information to the second DBNG-CP by means of a first PFCP protocol message.

In the present embodiment, after the redundancy group switching due to the failure of the first DBNG-CP, the method may further include: triggering switching of all DBNG-UPs managed by the first DBNG-CP in the redundancy group instance, so as to switch to manage all DBNG-UPs in the redundancy group instance by the second DBNG-CP.

In the present embodiment, after triggering redundancy group switching to switch the second DBNG-CP to be the active member, the method may further include: the second DBNG-CP notifies the DBNG-UP of a redundancy group switching result by means of a second PFCP protocol message.

In the present embodiment, the failure of the first DBNG-CP may be one of the following: when the first DBNG-CP is in an active state, a failure detected by the first DBNG-CP; and when the first DBNG-CP is in an offline state, a failure of the first DBNG-CP detected by the DBNG-UP by means of a connection with the first DBNG-CP.

In the present embodiment, the first DBNG-CP and the second DBNG-CP extend a redundancy capacity association message by means of a private protocol so as to complete CP redundancy capacity association.

In the present embodiment, a PFCP node report mechanism is used to report the failure information of the first DBNG-CP and perform redundancy group switching notification.

In the present embodiment, the failure information of the first DBNG-CP is reported by means of a PFCP node report request message, and redundancy group switching notification is performed by means of a PFCP node report response message.

In the present embodiment, an information element of the PFCP node report request message is extended so as to report the failure information of the first DBNG-CP.

In the present embodiment, the extended information element in the PFCP node report request message includes a control plane path failure information element and a CP redundancy group identifier information element.

In the present embodiment, before step S202, the method may further include: configuring a plurality of redundancy group instances for the first DBNG-CP; and for each redundancy group instance, configuring a plurality of DBNG-UPs managed by the first DBNG-CP, and an active/standby switching policy of the first DBNG-CP redundancy group instance.

In the present embodiment, the first DBNG-CP may be an active member in a first redundancy group instance and may be a standby member in a second redundancy group instance.

By means of the described steps in the present embodiment, the active/standby election is completed between the first DBNG-CP and the second DBNG-CP by means of redundancy capability association, and a failure detection and redundancy group switching mechanism for the DBNG-CP is provided, thereby increasing the flexibility of DBNG-CP redundancy protection, and realizing DBNG-CP active or standby management based on DBNG-UP granularity; in addition, on a control plane interface between the redundancy group member DBNG-CP and the DBNG-UP, an IE of the PFCP protocol is extended, thereby satisfying the requirement of DBNG-CP redundancy capability association.

From the description of the described embodiment, a person skilled in the art may clearly understand that the method according to the described embodiment may be implemented by software and a necessary universal hardware platform, and definitely may also be implemented by hardware. However, in many cases, the former is a preferred implementation. Based on such understanding, the technical solutions of the present disclosure essentially or the part contributing to the prior art may be embodied in the form of a software product. The computer software product is stored in a storage medium (such as a ROM/RAM, a magnetic disk, or an optical disk), and includes several instructions for causing a terminal device (which may be a mobile phone, a computer, a server, or a network device) to execute the method described in the embodiments of the present disclosure.

Further provided in the present embodiment is a DBNG-CP redundancy apparatus, which is configured to implement the described embodiment and preferred implementation, and what has been described will not be described herein again. The term "module", as used hereinafter, is a combination of software and/or hardware capable of realizing a predetermined function. Although the apparatus described in the following embodiment is preferably implemented by software, implementation by hardware or a combination of software and hardware is also possible and conceived.

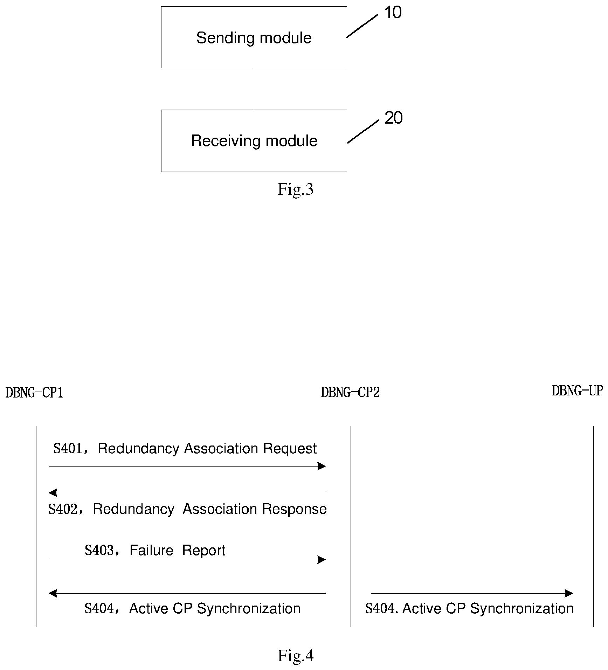

Fig. 3 is a structural block diagram of a redundancy apparatus 100 for a disaggregated broadband network gateway-control plane (DBNG-CP) network function according to an embodiment of the present disclosure. As shown in Fig. 3, the apparatus includes a sending module 10 and a receiving module 20.

The sending module 10 is configured to send a redundancy association request to a second DBNG-CP which belongs to the same redundancy group instance, so as to perform redundancy capability association.

The receiving module 20 is configured to receive a redundancy association response returned by the second DBNG-CP with respect to the redundancy association request, so as to complete the active/standby election between the first DBNG-CP and the second DBNG-CP.

It should be noted that the described various modules may be implemented by software or hardware. The latter may be implemented in the following manner, but is not limited thereto: all the modules are located in a same processor; alternatively, the described various modules are located in different processors in an arbitrary combination.

To facilitate understanding of the technical solutions provided in the present disclosure, the following describes the technical solutions in detail with reference to the embodiments of specific scenarios.

It should be noted that, in the embodiment of the present disclosure, the control interface between the DBNG-CP and the DBNG-UP is extended by using the PFCP protocol as an example. However, the present disclosure is not limited to the PFCP protocol, and no matter which protocol is used for the control interface, the Information Element (IE) type and Type Length Value (TLV) encapsulation information provided may be universal.

### Embodiment 1

The present embodiment provides a DBNG-CP redundancy processing mechanism. In the present embodiment, a DBNG-CP1 and a DBNG-CP2 are configured to be in the same redundancy group instance, and the DBNG-CP1 and the DBNG-CP2 notify CP Redundancy capability by means of a heartbeat cable between nodes. The heartbeat cable communication is implemented by running on an interface between the DBNG-CPs, and cannot be implemented by a control plane interface protocol between the DBNG-CP and the DBNG-UP. In the present embodiment, a private protocol can be used for implementation. In terms of protocol extension requirements, a Redundancy Group capability IE needs to be extended and supported to perform Redundancy capability association.

Fig. 4 is a flowchart of a DBNG-CP redundancy processing mechanism. As shown in Fig. 4, the method includes the following steps:
step S401: a DBNG-CP1 sends a Redundancy Association Request to a DBNG-CP2.
Step S402: the DBNG-CP1 sends a Redundancy Association Response to the DBNG-CP2.

By means of steps S401-S402, the DBNG-CP1 and the DBNG-CP2 complete the Redundancy capability association to require the heartbeat cable between the CPs to carry redundancy information for the notification of the redundancy capability, and complete the active/standby election of the first DBNG-CP and the second DBNG-CP.

Step S403: after the DBNG-CP1 fails, the DBNG-CP1 reports the failure to the DBNG-CP2 by means of the heartbeat cable. In the present embodiment, after the DBNG-CP1 fails, the failure information may also be reported to the DBNG-CP2 by means of the control plane interface by using the DBNG-UP. If the failure of the active DBNG-CP1 is reported by using the DBNG-UP, the control plane interface protocol between the DBNG-CP and the DBNG-UP needs to be extended, for example, protocol extension processing needs to be performed on the PFCP protocol.

Step S404: the standby member DBNG-CP2 detects the failure information, triggers switching of a DBNG-CP Redundancy instance to switch itself to be the active member, notifies the corresponding user plane network function DBNG-UP of user information, and synchronizes user information entries to the DBNG-CP2.

### Embodiment 2

The present embodiment mainly provides a method for configuring a BNG-CP redundancy group instance. A DBNG-CP instance in a fixed network may manage hundreds of DBNG-UPs, and a DBNG-CP may be an active DBNG-CP for some DBNG-UPs, and may also serve as a standby DBNG-CP for some other DBNG-UPs at the same time. To this end, in the present embodiment, it is proposed that when configuring a BNG-CP redundancy group instance, DBNG-UP members to be managed need to be added.

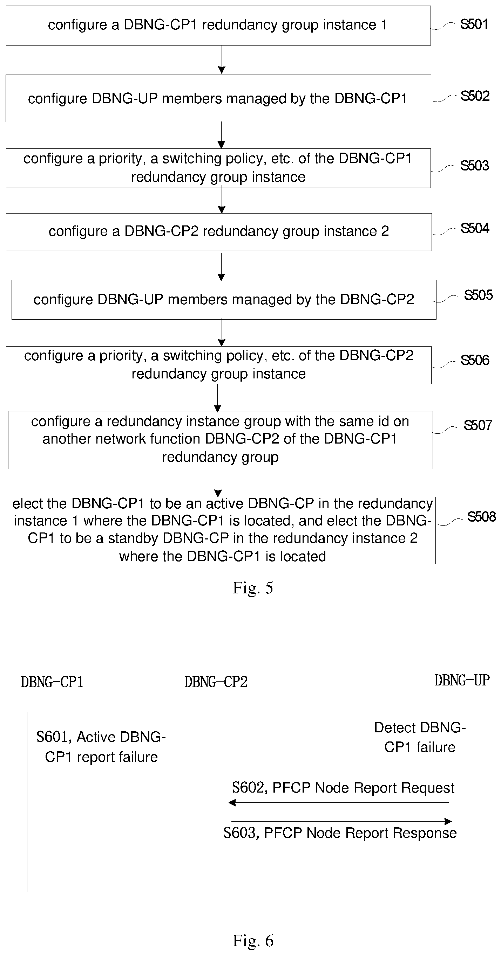

As shown in Fig. 5, the method includes the following steps:
step S501: configuring a DBNG-CP1 redundancy group instance 1;
step S502: configuring DBNG-UP members managed by the DBNG-CP1, for example, including DBNG-UPn+1, DBNG-UPn+2, etc.;
step S503: configuring a priority, a switching policy, etc. of the DBNG-CP1 redundancy group instance;
step S504: configuring a DBNG-CP2 redundancy group instance 2;
step S505, configuring DBNG-UP members managed by the DBNG-CP2, for example, including DBNG-UPm+1, DBNG-UPm+2, etc.;
step S506: configuring a priority, a switching policy, etc. of the DBNG-CP2 redundancy group instance;
step S507: configuring a redundancy instance group with the same id on another network function DBNG-CP2 of the DBNG-CP1 redundancy group, i.e. adding DBNG-UPn+1 and DBNG-UPn+2 as DBNG-UP members of the redundancy instance group 1; and adding DBNG-UPm+1 and DBNG-UPm+2 as DBNG-UP members of the redundancy instance group 2; and
step S508: according to a redundancy algorithm mechanism, electing the DBNG-CP1 to be an active DBNG-CP in the redundancy instance 1 where the DBNG-CP1 is located, and electing the DBNG-CP1 to be a standby DBNG-CP in the redundancy instance 2 where the DBNG-CP1 is located.

In the present embodiment, the members configured for the DBNG-CP redundancy group instance are DBNG-UPs, and by configuring and managing the redundancy group switching policies of different DBNG-UP groups, the balanced management of the DBNG-UPs in the network is achieved.

### Embodiment 3

The present embodiment mainly relates to Redundancy failure information report processing supported by the PFCP protocol. As described in step S406 of the described embodiment, if the DBNG-CP redundancy failure information is reported by means of the DBNG-UP, it needs to be supported by the control interface protocol between the DBNG-CP and the DBNG-UP.

In the present embodiment, taking that the PFCP protocol is used to perform redundancy failure information report processing as an example, it is completed by using PFCP Node Report information association. Fig. 6 is a flowchart of redundancy failure information report processing supported by a PFCP protocol. As shown in Fig. 6, the flow mainly includes the following steps:
step S601: a DBNG-CP1 detects a failure as an active CP, wherein the failure information includes detecting a connection failure of a DBNG-UP managed by the DBNG-CP1, or the DBNG-CP1 is offline, or a failure of the DBNG-CP1 detected by the DBNG-UP by means of a connection with the DBNG-CP1.
Step S602: the DBNG-UP reports the failure information to a standby DBNG-CP2, wherein the failure information is carried in a PFCP Node Report Request.
Step S603: the DBNG-CP2 triggers switching of a local redundancy group according to a redundancy algorithm mechanism, switches itself to be an active DBNG-CP, and notifies the DBNG-UP of a switching result by means of a PFCP Node Report Response.

### Embodiment 4

The present embodiment provides an extension solution supported by a PFCP Redundancy Group. As described in chapter 7.4.5 of 3GPP TS29.244, a PFCP Node Report includes two packet types: a PFCP Node Report Request and a PFCP Node Report Response. Wherein, the PFCP Node Report Request contains an Alternative SMF IP Address IE for designating an SMF redundancy address, an SMF of a 3GPP core network is a control plane network function of a UPF, the UPF is a user plane network function and corresponds to a fixed network, a DBNG-CP is a DBNG control plane network function, and a DBNG-UP is a DBNG user plane network function. The redundancy protection of the DBNG-CP is similar to that of the SMF. The difference from the core network 29.244 lies in that the redundancy protection of the DBNG-CP is dynamic policy configuration, and the active and standby are not manually specified; therefore, in terms of protocol extension implementation, new IE needs to be added for implementation. When configuring a BNG-CP redundancy group instance, DBNG-UP members to be managed need to be added, and at the same time, an active/standby selection policy configuration is added for active/standby DBNG-CP election.

In the present embodiment, by using the PFCP protocol, the requirement of DBNG-CP protection flexibility can be satisfied by means of an existing Node ID IE in combination with an Alternative SMF IP Address IE, but when PFCP application is performed, Node ID information of the DBNG-CP needs to be clearly specified, and the specification for DBNG-UP members, a CP Redundancy protection mode, a CP Redundancy priority policy, etc. needs to be added. As shown in Table 1, new CP Redundancy Group identifier IEs need to be added.

**Table 1**

| **Information elements** | **Condition / Comment** | **IE Type** |
|---|---|---|
| CP Redundancy Group ID | This IE shall contain the unique identifier of the redundancy group | CP Redundancy Group ID |
| Control Plane Path Failure Report | If the node report type indicates a control plane path failure report, this IE shall be used | Control Plane Path Failure Report |

Wherein, the encapsulation format of the CP Redundancy Group ID IE is as shown in Table 2:

**Table 2**

| | | | | | | | | | |
|---|---|---|---|---|---|---|---|---|---|
| | Bits | | | | | | | | |
| Octets | 8 | 7 | 6 | 5 | 4 | 3 | 2 | 1 | |
| 1 to 2 | Type = XXX (decimal) | | | | | | | | |
| 3 to 4 | Length = n | | | | | | | | |
| 5 | CP Redundancy Group ID | | | | | | | | |
| 6 to 7 | CP Redundancy Group Member | | | | | | | | |
| 8 to 9 | CP Redundancy Group Type | | | | | | | | |
| 10 to 11 | CP Redundancy Group Policy | | | | | | | | |

The IE in Table 2 is used to deliver configuration information of a CP redundancy group, and its encapsulation situation is as follows:
bits 1-2 are used for encapsulation of IE type information, and the IE type information is a CP Redundancy Group ID IE.
Bits 3-4 are used for encapsulation of IE field length information.
Bit 5 is used for encapsulation of ID information of a CP Redundancy Group, and represents information such as name and identifier of the Group.

In the present embodiment, a CP Redundancy Group member refers to UP information managed by a CP.

Bits 6-7 are used for encapsulation of CP Redundancy Group Member information, including a name or an identifier (id) of a physical interface between a CP and a user side, or a name or an id of a virtual interface, etc.

Bits 8-9 are used for encapsulation of CP Redundancy Group Type information, and are used for describing hot standby, cold standby or warm standby, etc.

Bits 10-11 are used for encapsulation of CP Redundancy Group Policy information, and are used for describing a policy of CP switching, such as a priority and a switching policy.

### Embodiment 5

The present embodiment provides a protocol extension solution for PFCP Redundancy failure information report. As described in chapter 7.4.5 of 3GPP TS29.244, a Node Report Request includes a CP Path Failure Report IE, but the CP Path Failure Report IE type defined in 3GPP needs to be extended to support a Port, a Logical Port (such as tunnel, PW) and a Node. A Logical Port IE has been added in chapter 6.6.2 of BBF TR-459. The corresponding type is 32769. The failure problem of the Node instance may be understood as being based on the port interface, and therefore, it is unnecessary to perform IE extension again.

In the present embodiment, the encapsulation format of a Control Plane Path Failure Report IE is shown in Table 3.

**Table 3**

| | | | | | | | | | |
|---|---|---|---|---|---|---|---|---|---|
| | Bits | | | | | | | | |
| Octets | 8 | 7 | 6 | 5 | 4 | 3 | 2 | 1 | |
| 1 to 2 | Type = XXX (decimal) | | | | | | | | |
| 3 to 4 | Length = n | | | | | | | | |
| 5 to 6 | Local Logical Port IP Address | | | | | | | | |
| 7 to 8 | Remote Logical Port IP Address | | | | | | | | |

This IE is used for path failure reporting of a CP instance, and if a path unreachability failure exists in a redundancy group interface, a DBNG-UP reports Node Report Request information to a DBNG-CP. The specific encapsulation format of the IE is as follows:
bits 1-2 are used for encapsulation of IE type information, wherein the IE type information is a Control Plane Path Failure IE.
Bits 3-4 are used for encapsulation of IE field length information.
Bits 5-6 are used for carrying local logical interface IP address information, and address reachability detection information.
Bits 7-8 are used for carrying remote logical interface IP address information, and address reachability detection information.

In the described embodiment of the present disclosure, 1) in order to increase the flexibility of DBNG-CP redundancy protection, DBNG-CP active or standby management based on DBNG-UP granularity is realized. 2) On a control plane interface between redundancy group members DBNG-CP1 and DBNG-CP2 and user plane network function DBNG-UP, IE extension is used to satisfy the requirement for CP Redundancy capability association. 3) The DBNG-CP1 and the DBNG-CP2 can complete the extension of a Redundancy association message by means of protocol interaction, and the Redundancy failure detection capability and the Redundancy processing capability are added to the association interaction flow. The IE used in the interaction message may be a newly added Fixed Redundancy IE or an extension of an existing IE.

In the described embodiment of the present disclosure, the following processing of a PFCP protocol implementation mechanism is further provided. 4) A PFCP Node Report implementation mechanism is used to complete a CP failure detection and protection group switching flow. 5) In a PFCP Node Report processing flow, PFCP Node Report Request and a PFCP Node Report Response mechanisms are used to carry DBNG-CP failure detection information and perform protection group switching notification. 6) The extension of an IE of PFCP Node Report Request information is mainly used for CP failure point report request. The IE may be a newly added Fixed Redundancy IE or an extension of an existing IE. 7) The extension of an IE of PFCP Node Report Response information is used by the new active CP to notify the user plane network function DBNG-UP of the user flow table, etc.

The embodiments of the present disclosure further provide a computer readable storage medium, the computer readable storage medium storing a computer program, wherein the computer program is configured to execute the steps in any one of the described method embodiments when running.

In an exemplary embodiment, the computer readable storage medium may include, but is not limited to, any medium that can store a computer program, such as a USB flash disk, a Read-Only Memory (ROM), a Random Access Memory (RAM), a mobile hard disk, a magnetic disk, or an optical disk.

The embodiments of the present disclosure further provide an electronic device, including a memory and a processor, wherein the memory stores a computer program, and the processor is configured to run the computer program so as to execute the steps in any of the described method embodiments.

In an exemplary embodiment, the electronic device may further include a transmission device and an input/output device, wherein the transmission device is connected to the processor, and the input/output device is connected to the processor.

For specific examples in the present embodiment, reference may be made to the examples described in the foregoing embodiments and exemplary implementations, and details are not repeatedly described in the present embodiment.

Obviously, those skilled in the art should understand that various modules or various steps of the present disclosure can be implemented by a universal computing apparatus, and the various modules or steps can be integrated on a single computing apparatus or distributed over a network formed by a plurality of computing apparatuses, and can be implemented by program codes executable by the computing apparatus, so that the modules or steps can be stored in a storage apparatus and executed by the computing apparatus, and the shown or described steps can be executed in sequences different from those described here in some cases, or the various modules or steps can be implemented by manufacturing the modules or steps into various integrated circuit modules respectively, or manufacturing multiple modules or steps among the various modules or steps into a single integrated circuit module. Thus, the present disclosure is not limited to any specific combination of hardware and software.

The above description is only the preferred embodiments of the present disclosure, and is not intended to limit the present disclosure. For those skilled in the art, the present disclosure may have various modifications and variations. Any modifications, equivalent replacements, improvements and the like made within the principle of the present disclosure shall belong to the protection scope of the present disclosure.

## Claims

1. A disaggregated broadband network gateway-control plane, DBNG-CP, redundancy method, comprising:
sending, by a first DBNG-CP, a redundancy association request to a second DBNG-CP which belongs to the same redundancy group instance, so as to perform redundancy capability association; and
receiving, by the first DBNG-CP, a redundancy association response returned by the second DBNG-CP with respect to the redundancy association request, so as to complete the active/standby election between the first DBNG-CP and the second DBNG-CP;
wherein the DBNG-CP redundancy group manages a group of DBNG-UPs.

2. The method according to claim 1, wherein after completing the active/standby election between the first DBNG-CP and the second DBNG-CP, the method further comprises:
after detecting that the first DBNG-CP as an active member fails, reporting failure information to the second DBNG-CP, and triggering redundancy group switching to switch the second DBNG-CP to be the active member.

3. The method according to claim 2, wherein after the redundancy group switching due to the failure of the first DBNG-CP, the method further comprises:
triggering switching of all DBNG-UPs managed by the first DBNG-CP in the redundancy group instance, so as to switch to manage all DBNG-UPs in the redundancy group instance by the second DBNG-CP.

4. The method according to claim 2, wherein the DBNG-UP reports the carried failure information to the second DBNG-CP through a first PFCP protocol message.

5. The method according to claim 4, wherein after triggering redundancy group switching to switch the second DBNG-CP to be the active member, the method further comprises:
notifying, by the second DBNG-CP, the DBNG-UP of a redundancy group switching result by means of a second PFCP protocol message.

6. The method according to claim 2, wherein the failure of the first DBNG-CP is one of the following:
when the first DBNG-CP is in an active state, a failure detected by the first DBNG-CP; and
when the first DBNG-CP is in an offline state, a failure of the first DBNG-CP detected by the DBNG-UP by means of a connection with the first DBNG-CP.

7. The method according to claim 2, wherein the first DBNG-CP and the second DBNG-CP extend a redundancy capacity association message through a private protocol so as to complete CP redundancy capacity association.

8. The method according to claim 5, wherein a PFCP node report mechanism is used to report the failure information of the first DBNG-CP and perform redundancy group switching notification.

9. The method according to claim 8, wherein the failure information of the first DBNG-CP is reported through a PFCP node report request message, and redundancy group switching notification is performed through a PFCP node report response message.

10. The method according to claim 9, wherein an information element of the PFCP node report request message is extended so as to report the failure information of the first DBNG-CP.

11. The method according to claim 10, wherein the extended information element in the PFCP node report request message comprises a control plane path failure information element and a CP redundancy group identifier information element.

12. The method according to claim 1, wherein before the first DBNG-CP sends a redundancy association request to the second DBNG-CP, the method further comprises:
configuring a plurality of redundancy group instances for the first DBNG-CP; and
for each redundancy group instance, configuring a plurality of DBNG-UPs managed by the first DBNG-CP, and an active/standby switching policy of the first DBNG-CP redundancy group instance.

13. The method according to claim 12, wherein the first DBNG-CP is an active member in a first redundancy group instance and is a standby member in a second redundancy group instance.

14. A disaggregated broadband network gateway-control plane, DBNG-CP, redundancy apparatus, located in a first DBNG-CP, comprising:
a sending module, configured to send a redundancy association request to a second DBNG-CP which belongs to the same redundancy group instance, so as to perform redundancy capability association; and
a receiving module, configured to receive a redundancy association response returned by the second DBNG-CP with respect to the redundancy association request, so as to complete the active/standby election between the first DBNG-CP and the second DBNG-CP.

15. A computer readable storage medium, the computer readable storage medium storing a computer program, wherein the computer program is configured to, when executed by a processor, implement the steps of the method as claimed in any one of claims 1 to 13.

16. An electronic device, comprising a memory, a processor, and a computer program stored on the memory and executable on the processor, wherein the processor is configured to execute the computer program to implement the steps of the method as claimed in any one of claims 1 to 13.
